# EUROPÄISCHE PATENTSCHRIFT

(11) **EP 2 295 375 B1**
(45) Veröffentlichungstag und Bekanntmachung des Hinweises auf die Patenterteilung: **13.04.2016**
(21) Anmeldenummer: 09011773.0
(22) Anmeldetag: 15.09.2009
(51) Int. Cl.: C01B 17/94, C01B 21/46

(54) **VERFAHREN UND ANLAGE ZUR AUFARBEITUNG VON ABFALL-SCHWEFELSÄUREN AUS NITRIERPROZESSEN**
METHOD AND DEVICE FOR PROCESSING WASTE SULPHURIC ACIDS FROM NITRATION PROCESSES
PROCÉDÉ ET INSTALLATION POUR LE TRAITEMENT DE DÉCHETS D'ACIDES SULFURIQUES ISSUS DE PROCESSUS DE NITRATION

(43) Veröffentlichungstag der Anmeldung: 16.03.2011
(73) Patentinhaber: De Dietrich Process Systems GmbH, 55122 Mainz (DE)
(72) Erfinder: Dichtl, Gottfried, 55270 Zornheim (DE); Steeg, Harald, 55422 Bacharach (DE)
(74) Vertreter: Andrae | Westendorp Patentanwälte Partnerschaft

(56) Entgegenhaltungen:
- EP-B1- 1 876 142
- DE-B3-102006 013 579

## Beschreibung

Die vorliegende Erfindung betrifft ein Verfahren und eine Anlage zur Aufarbeitung, d.h. einer Auftrennung, Reinigung und Konzentrierung verbrauchter und verwässerter Schwefelsäure aus Nitrierprozessen, bei denen Salpetersäure in Gegenwart von Schwefelsäure als Nitriermedium eingesetzt wird. Eine solche verwässerte Schwefelsäure wird in der vorliegenden Anmeldung in der Regel kurz als "Abfallsäure" bezeichnet.

Nitrierverfahren spielen in der chemischen Industrie zur Herstellung von Nitroverbindungen eine zentrale Rolle und werden im großindustriellen Maßstab durchgeführt. Die hergestellten Nitroverbindungen dienen aufgrund der zahlreichen Reaktionsmöglichkeiten von Nitrogruppen und der daraus herstellbaren Folgeprodukte in den meisten Fällen als wertvolle Zwischenprodukte.

Besonders wichtig ist die Nitrierung von aromatischen Verbindungen, z.B. von Toluol, unter Herstellung von Nitroaromaten, insbesondere von Dinitrotoluol (2,4-Dinitrotoluol; DNT) oder Trinitrotoluol (TNT), da aromatische Nitrogruppen durch Reduktion einfach in Aminogruppen überführt werden können, die ihrerseits zahlreichen weiteren Umsetzungen unterzogen werden können. Eine besonders wichtige Weiterverarbeitung z.B. von DNT ist die zu Toluoldiisocyanat (TDI) nach einer einleitenden Reduktion von DNT zu Toluoldiaminen und einer nachfolgenden Umsetzung mit Phosgen, oder auch durch direkte Umsetzung des DNT mit CO. TDI ist eines der wichtigsten aromatischen Diisocyanate zur Herstellung von Polyurethanen.

Die Einführung einer oder mehrerer Nitrogruppen in eine aromatische Verbindung wie z.B. Toluol erfolgt als elektrophile Substitution mit Hilfe von Salpetersäure im Gemisch mit Schwefelsäure, z.B. einstufig mit Nitriersäure (dieser Begriff bezeichnet unterschiedlich zusammengesetzte Gemische von konzentrierter Schwefel- und Salpetersäure) oder, im Falle einer Dinitrierung wie bei der Herstellung von DNT, ggf. auch zweistufig mit Säuren unterschiedlicher Stärken, wobei bei einem typischen zweistufigen Verfahren in der ersten Stufe, unter Verwendung einer weniger konzentrierten ggf. aufgearbeiteten Abfallsäure aus der zweiten Stufe, Toluol zu Mononitrotoluol (MNT) nitriert wird, wobei anschließend in dieses MNT in der zweiten Stufe unter Verwendung einer hochkonzentrierten Salpetersäure unter Bildung von DNT eine weitere Nitrogruppe eingeführt wird (vgl. z.B. EP 155 586 A1).

Während der Salpetersäureanteil der Nitriersäure bei der Einführung der Nitrogruppen als Substituenten am aromatischen Ring zu einem möglichst hohen Anteil verbraucht wird, wird die gleichzeitig vorhandene konzentrierte Schwefelsäure während der Nitrierung nur durch das entstehende Reaktionswasser verdünnt und verunreinigt. Sie bildet die "Abfallsäure", die typischerweise hauptsächlich aus einer ca. 70 Ma.-%igen (Masse-%) Schwefelsäure und Wasser, sowie geringeren Anteilen an Salpetersäure, Nitroorganika, beispielsweise Mononitrotoluol (MNT) und Dinitrotoluol (DNT), sowie nitrosen Bestandteilen in Form von z.B. Nitrosylschwefelsäure besteht.

Es ist ein zwingendes Erfordernis einer modernen ökonomischen Verfahrensführung, diese Abfallsäure aufzuarbeiten und in eine im Verfahren wieder verwendbare konzentriertere Schwefelsäure zu überführen. Ein Einsatz von frischer Schwefelsäure für den Nitrierprozess ist aus ökonomischen und umweltrelevanten Gründen seit langem nicht mehr vertretbar.

Daher wird heute regelmäßig eine Rückkonzentrierung des Stroms der Abfallsäure auf Schwefelsäurekonzentrationen zwischen 85 Ma.-% bis 97 Ma.-% durchgeführt, wobei es das Ziel sein muss, eine solche Rückkonzentrierung mit einem möglichst geringen Energieeinsatz und der Bildung möglichst geringer Mengen an chemikalienbelasteten Abfallströmen, die aus dem Verfahren ausgeschleust werden müssen, zu erreichen.

Eine Hochkonzentrierung von Schwefelsäure bis maximal 96 Ma.-% Schwefelsäuregehalt, die auf Grund der thermodynamischen Verfahrensvoraussetzungen in den letzten Stufen sinnvoll bei Unterdruckbedingungen erfolgt, ist mit der Entwicklung von dafür geeigneten hochkorrosionsbeständigen Materialien wie Tantal, Email und Glas für die Verdampfung bei hohen Temperaturen seit Jahrzehnten Stand der Technik. Dabei ist allerdings als Einschränkung zu beachten, dass das bevorzugte Verdampfermaterial Tantal nur bei einer maximalen Siedetemperatur der zu konzentrierenden Abfallsäure von weniger als 208°C eingesetzt werden darf.

Die besondere Problematik bei der Aufkonzentrierung von Abfallsäuren aus Nitrierprozessen liegt in den aus der Nitrierung stammenden Fremdbestandteilen in der Säure, insbesondere in Form von Stickstoff-Sauerstoff-Gruppen enthaltenden Verbindungen wie Salpetersäure, verschiedenen Organika, hauptsächlich MNT und DNT, sowie den gelösten nitrosen Bestandteilen in Form von Nitrosylschwefelsäure (NSS), deren Gehalt in der Regel als Gehalt an salpetriger Säure (HNO₂) angegeben wird.

Da die genannten Stoffe ihrem Charakter nach entweder potentielle Einsatzprodukte sind oder unvollständig abgetrennte Produkte bzw. Zwischenprodukte, wird natürlich angestrebt, sie ebenso wie die Schwefelsäure zurück zu gewinnen und sie dem Nitrierprozess weitestgehend wieder zuführen zu können und die Verluste dieser Ausgangs-, Zwischen- und Endprodukte so gering wie möglich zu halten. Die Verfahren des Standes der Technik waren diesbezüglich jedoch noch suboptimal, insbesondere wenn man berücksichtigt, dass sich derartige potentiell nützlichen Produkte auch noch in anderen Produktströmen eines Verfahrens zur Nitrierung von aromatischen Verbindungen finden lassen, z.B. im Waschwasser des in kristalliner Form isolierten Verfahrens-Endprodukts der Toluolnitrierung, des DNT, die früher vielfach als Abfallströme aus dem Nitrierverfahren ausgeschleust bzw. separat aufgearbeitet wurden. Ein DNT-Waschwasser der genannten Art ist säurehaltig, weshalb es auch als "Waschsäure" bezeichnet wird, ein Begriff, der in der vorliegenden Beschreibung vorrangig verwendet wird. Eine Waschsäure kann z.B. eine typische Zusammensetzung von 10-20 Ma.-% HNO₃, 5-12 Ma.-% H₂SO₄ (18-35 Ma.-% Gesamtsäure) sowie gelöste Nitroorganika (DNT, MNT) aufweisen.

Die Anwesenheit der genannten Stickstoff-Sauerstoff-Verbindungen, insbesondere der Nitroorganika, in der Abfallsäure führt dazu, dass die Rückgewinnung und Aufkonzentrierung des Schwefelsäureanteils mit besonderen technischen Schwierigkeiten verbunden ist. So können die Anteile der nitrierten Aromaten, die schwerflüchtige Feststoffe darstellen, die in wässrigen Medien eine geringe Löslichkeit aufweisen und aus diesen ausfallen können, sich an Anlagenteilen abscheiden, diese verstopfen und dadurch das Gesamtverfahren stören. Die Anteile an Salpetersäure und Nitrosoverbindungen dagegen sind relativ flüchtig und können in Abdampfströme übergehen, aus denen sie jedoch schwer zurück zu gewinnen sind und ein Umweltrisiko darstellen können.

Bei der Aufarbeitung von Abfallsäure zur Schwefelsäurekonzentrierung stellt die Abtrennung der Salpetersäure von der konzentrierten Schwefelsäure aufgrund ihrer vergleichweise hohen Flüchtigkeit kein größeres technisches Problem dar. Sie gelangt hauptsächlich in das Kondensat der Dampfphase einer destillativen Auftrennung der Abfallsäure ("Brüdenkondensat"). Es wird heute angestrebt, die auf diese Weise abgetrennte Salpetersäure verfahrensökonomisch vorteilhaft möglichst vollständig und in möglichst hochkonzentrierter Form zurück zu gewinnen, so dass sie wieder im Nitrierverfahren verwendbar ist.

Gleichzeitig soll die Schwefelsäure aus der Abfallsäure möglichst vollständig und gut gereinigt in hochkonzentrierter Form zurück gewonnen werden, und die aus Verfahren zur Aufarbeitung von Abfallsäure auszuschleusenden Abgas- und Abwasserströme sollen möglichst wenig durch Schadstoffe wie nitrose Gase und Säuren belastet sein und auch möglichst wenig Wärme als Abwärme enthalten.

Es wurden daher in den letzten Jahren verschiedene Verfahren zur Aufarbeitung von Abfallsäure entwickelt, die die obigen Anforderungen mehr oder weniger perfekt erfüllen.

Zum modernen einschlägigen Stand der Technik sind insbesondere zu nennen Verfahren gemäß EP 155 586 A1 bzw. DE 34 09 719 A1, gemäß DE 196 36 191 B4, DE 10 2006 013 579 B3 sowie gemäß EP 1 876 142 B1. Auf den Inhalt dieser Dokumente wird zur Ergänzung der nachfolgenden Ausführungen und deren Vertiefung ausdrücklich verwiesen. Auf die genannten Dokumente wird außerdem in der nachfolgenden Beschreibung wiederholt Bezug genommen.

Wie beispielsweise im Dokument DE 196 36 191 A1 beschrieben wird, wurde die Abfallsäure in der Vergangenheit in der Regel in einer Stufe der Vorkonzentrierung auf den oberen Teil einer mit Wasserdampf im Gegenstrom betriebenen Strippkolonne aufgegeben, um die Salpetersäure nahezu vollständig aus der Schwefelsäure abzutrennen. Eine weitere erwünschte Wirkung dieser Vorkonzentrierung mittels einer Strippkolonne bestand darin, dass man gleichzeitig auch einen Teil der störenden Nitroorganika durch Strippen entfernen konnte. Die Energie für eine solche Vorkonzentrierstufe, die vorwiegend unter Normaldruck betrieben wurde, wurde je nach Verfahren entweder indirekt von einem eigenem Heizer geliefert, jedoch auch von einem in die Strippkolonne eingeleiteten Direktdampf.

Als Kopfprodukt der Vorkonzentrierstufe wurde nach dessen Totalkondensation zwangsläufig eine sehr wässrige, DNT/MNT- und HNO₃-haltige heterogene Lösung erhalten, aus der zunächst die nichtlöslichen, als Feststoffe ausfallenden Organikabestandteile durch Schwerkraft (Absitzenlassen) abgeschieden werden mussten. Um die in der erhaltenen flüssigen Phase enthaltene Salpetersäure zurückzugewinnen, musste eine zusätzliche unterazeotrope Rektifikationsstufe, die meist wie die Vorkonzentrierstufe bei Normaldruck arbeitete, in das Aufarbeitungsverfahren integriert werden, um im Sumpf einer solchen Rektifikation eine ca. 45 - 50 %ige Salpetersäure zu gewinnen. Diese kann bei vielen Nitrierverfahren ohne weitere Höherkonzentrierung ebenso wie die abgeschiedenen Organika (hauptsächlich DNT) durch Rückführung direkt in der Nitrierung wieder verwendet werden.

Da bei Nitrierverfahren jedoch auch stets noch höherkonzentrierte Salpetersäure benötigt wird, ist in der Regel noch eine Hochkonzentrierung der Salpetersäure in einem besonderen Anlagenteil vorgesehen.

Als Kopfprodukt der obigen unterazeotropen Vorkonzentration wird ein relativ säurefreies Abwasser gewonnen, das wenigstens zum Teil als Waschwasser für die Stufe der DNT-Wäsche im Nitrierverfahren verwendet werden kann. Das erhaltene Abwasser mit Anteilen von ca. 1 bis 2% an Salpetersäure führt jedoch bei einem Verfahren im großindustriellen Maßstab zu einem spürbaren Verlust an ungenutzter Salpetersäure und zu einer hohen Nitratbelastung des Abwassers, wie sie heute nicht mehr hingenommen werden können.

Einer der weiteren wesentlichen Nachteile einer solchen Vorkonzentration ist, dass für die Rektifikation das aus der Strippkolonne ausgeschleuste Wasser ein zweites Mal verdampft und kondensiert werden muss.

Es wurden daher bereits Verfahren beschrieben, deren Ziel es war, die Massen- und Energiebilanz der Aufarbeitung der Abfallsäure zu verbessern und außerdem die Abwassermenge zu vermindern bzw. die Abwasserqualität zu erhöhen, und bei denen außerdem bestimmte problematische Verfahrensschritte der üblichen Verfahren verbessert bzw. umgangen werden sollen.

Bei dem in der Patentschrift DE 10 2006 013 579 B3 beschriebenen Verfahren werden, ähnlich wie bei dem Verfahren gemäß EP 1 876 142 B1, die verschiedenen Verfahrensströme möglichst material- und energieeffizient kombiniert. Bei dem Verfahren gemäß DE 10 2006 013 579 B3 wird als Kopfprodukt jedoch nur eine 20 bis 40%ige Salpetersäure erhalten. Um die bei den heutigen modernen Verfahren zur DNT Herstellung angestrebten höheren Konzentrationen an Salpetersäure zu erreichen, muss bei einem Verfahren gemäß DE 10 2006 013 579 B3 eine weitere Aufkonzentrierung vor der Rückführung der Salpetersäure in den Nitrierprozess erfolgen. Diese weitere Aufkonzentrierung ist in einer weiteren Rektifikationsstufe durchzuführen, wobei ein zusätzliches Abwasser erhalten wird, dass einen geringen Anteil von Salpetersäure, etwa 1 bis 2% enthält und somit zu einer zusätzlichen Nitrat/Nitrit-Belastung im Abwasser führt. Gemäß EP 1 876 142 B1 werden auch die Prozessströme der Hochkonzentrierung der Salpetersäure in vorteilhafter Weise mit denen der eigentlichen Aufarbeitung der Abfallsäure kombiniert.

Große Probleme bei der Konzentrierung einer wässrigen Abfallsäure bereiten die darin gelösten Nitroorganika, vornehmlich das DNT. Aufgrund der eingeschränkten Mischbarkeit der Nitroorganika in der wässrigen Feedsäure sind MNT und DNT zwar wasserdampfflüchtig und lassen sich trotz der hohen Reinstoffsiedepunkte an sich prinzipiell durch Wasserdampf aus der Säure herausstrippen. Beim DNT, der höchstsiedenden der Nitroorganika-Verbindungen, gelingt die Abtrennung mit Strippdampf in der üblichen Vorkonzentrierstufe des Standes der Technik jedoch nur unzureichend.

Die Tatsache, dass in der Abfallsäure auch nach ihrer Vorkonzentrierung noch erhebliche Mengen an DNT vorhanden waren, führte gemäß EP 0 155 586 B1 dazu, dass in den folgenden Stufen der Aufkonzentrierung der Abfallsäure im Unterdruckbetrieb bei etwa 100 mbar abs und darunter aufgrund der thermodynamisch verbesserten Bedingungen für die Verflüchtigung des DNT weiteres DNT in das Brüdenkondensat dieser Unterdruckstufen gelangte. Da die Brüden der Unterdruckstufen aufgrund des Unterdrucks im System bei relativ niedrigen Temperaturen von < 45 °C kondensiert werden müssen, fällt das nicht gelöste DNT als Feststoff aus den Brüdenkondensaten aus und stört den kontinuierlichen Prozess der Schwefelsäure-Konzentrierung erheblich.

Um die Probleme zu vermeiden, die durch die DNT-Ausfällung in den Kondensaten der Brüden der Konzentrierung von Nitrierabfallsäure bei Unterdruck verursacht werden, wurde der in DE 196 36 191 B4 beschrieben Weg gewählt, indem in die Aufarbeitung der Abfallsäure vor der Konzentrierung bei Unterdruck eine Stufe der Reinigung der Abfallsäure durch Strippen mit möglichst viel Wasserdampf vorgeschaltet wird, um zu erreichen, dass die Nitroorganika, insbesondere das schwer strippbare DNT mit hohem Stockpunkt, in dieser Stufe nahezu gänzlich aus der ablaufenden Abfallschwefelsäure eliminiert werden (Restgehalt < 20 ppm), so dass sie bei den nachfolgenden Konzentrierstufen bei 100 mbar (a) und darunter in den wässrigen Kondensaten dieser Stufen keine Probleme aufgrund der beschriebenen DNT-Ausfällungen mehr bereiten.

In DE 196 36 191 B4 wird die Nutzung eines Strippdampfs bestehend aus dem Brüden des Sumpfverdampfers der Strippkolonne und zusätzlichem Wasserdampf als Frischdampf zum Strippen der Organika beschrieben, wobei die zugeführte zusätzlich Menge an Frischdampf auf Mengen im Bereich von 10 bis 30 Ma.-%, bezogen auf die zulaufende vorgereinigte Abfallsäuremenge, beschränkt ist.

Im Gegensatz dazu wird allerdings in DE 10 2006 013 579 B3 eine wesentlich geringere Strippdampfmenge, die durch den Kolonnensumpf-Verdampfer erzeugt wird, von nur 0,25 bis 10 Ma.-%, bezogen auf die zulaufende vorgereinigte Abfallsäuremenge, beschrieben, was in einem krassen Widerspruch zu ausgeführten Anlagen nach DE 196 36 191 B4 steht.

Aufgabe der vorliegenden Erfindung ist es, bei der Aufarbeitung der Abfallsäure eine möglichst hohe Konzentration der aus der Abfallsäure rückgewonnenen Salpetersäure und Schwefelsäure auf wirtschaftliche Weise zu erreichen und gleichzeitig eine Verminderung der organischen Belastung des Abwassers gegenüber dem derzeitigen Stand der Technik zu gewährleisten.

Diese Aufgabe wird durch ein erfindungsgemäßes Verfahren gemäß Anspruch 1 und die in den Ansprüchen 2 bis 14 wiedergegebenen vorteilhaften Ausgestaltungen eines solchen Verfahrens gelöst, sowie durch eine Anlage zur Durchführung eines solchen Verfahrens, deren Grundmerkmale in Anspruch 15 und den folgenden Ansprüchen 16 und 17 beschrieben werden.

Nachfolgend werden das erfindungsgemäße Verfahren in verschiedenen Varianten bzw. die Anlage zu dessen Durchführung unter Bezugnahme auf zwei Figuren näher beschrieben.

In den Figuren zeigen:
Figur 1 ein vereinfachtes Verfahrensfließbild einer herkömmlichen Anlage zur Aufarbeitung einer Abfallsäure unter Einsatz einer Strippkolonne und zur Weiterverarbeitung der dabei erhaltenen Verfahrensströme; und
Figur 2 ein Verfahrensfließbild einer Ausführungsform einer Anlage zur Verwirklichung des erfindungsgemäßen Verfahrens in einer ersten Verfahrensvariante mit einer Strippkolonne mit einem Abtriebsteil, einem Verstärkungsteil und einer dazwischen liegenden Zuführung der Abfallsäure.

Die vorliegenden Erfindung betrifft in ihrer allgemeinsten Form ein Verfahren zur Aufarbeitung von Abfallsäure aus Verfahren der Herstellung von Nitroaromaten, insbesondere der Herstellung von Dinitrotoluol (DNT) oder auch Trinitrotoluol (TNT), unter Rückgewinnung von aufkonzentrierter und aufgereinigter Schwefelsäure und Salpetersäure, bei dem man in einer ersten Stufe die Abfallsäure in einer Strippkolonne im Gegenstrom zu Wasserdampf aus dem Sumpf der Strippkolonne in mindestens eine dampfförmige Phase, die Salpetersäure sowie gegebenenfalls Nitroorganika enthält, sowie eine vorkonzentrierte Schwefelsäure auftrennt, und bei dem man dann die dampfförmige Phase und die vorkonzentrierte Schwefelsäure in nachgeschalteten Verfahrensstufen aufarbeitet, wobei man erfindungsgemäß in der ersten Stufe des Verfahrens zusätzlich zum Strippen eine Aufkonzentrierung der im Strippdampf enthaltenen Salpetersäure in Gegenwart zusätzlicher, der Strippkolonne zugeführter konzentrierter Schwefelsäure durchführt, so dass man direkt in der ersten Stufe Salpetersäure in einer für eine Rückführung in das Nitrierverfahren geeigneten hochkonzentrierten Form gewinnt.

Überraschend wurde gefunden, dass durch die obige Maßnahme, sowie zusätzliche Maßnahmen in Anpassung an bestimmte Gegebenheiten und Voraussetzungen bei der Erzeugung der Abfallsäure, wie sie nachfolgend genauer geschildert werden, gegenüber den bekannten Verfahren z.B. nach DE 196 36 191 B4, DE 10 2006 013 579 B3 oder gemäß EP 1 876 142 B1 die Konzentration der aus der Abfallsäure wieder gewonnenen Salpetersäure direkt in einer ersten Verfahrensstufe auf bis zu 99,99 % erhöht werden kann, und zwar bei gleichzeitiger Verminderung der Abwasserschadstoffe und Abwassermengen.

Die so erhältliche überazeotrope, bis fast 99,99 Ma.-%ige Salpetersäure hat, aufgrund der geringeren Wasserrückführung in die Nitrierstufe, einen erheblichen Einfluss auf das Ausmaß und die Effizienz der Nitrierung, was eine Verminderung der Kosten des Betriebs der Anlage bedeutet, und auf die Menge der im Kreislauf geführten Absäure, was eine Verminderung des Verbrauchs an Energie und der Emissionen bedeutet.

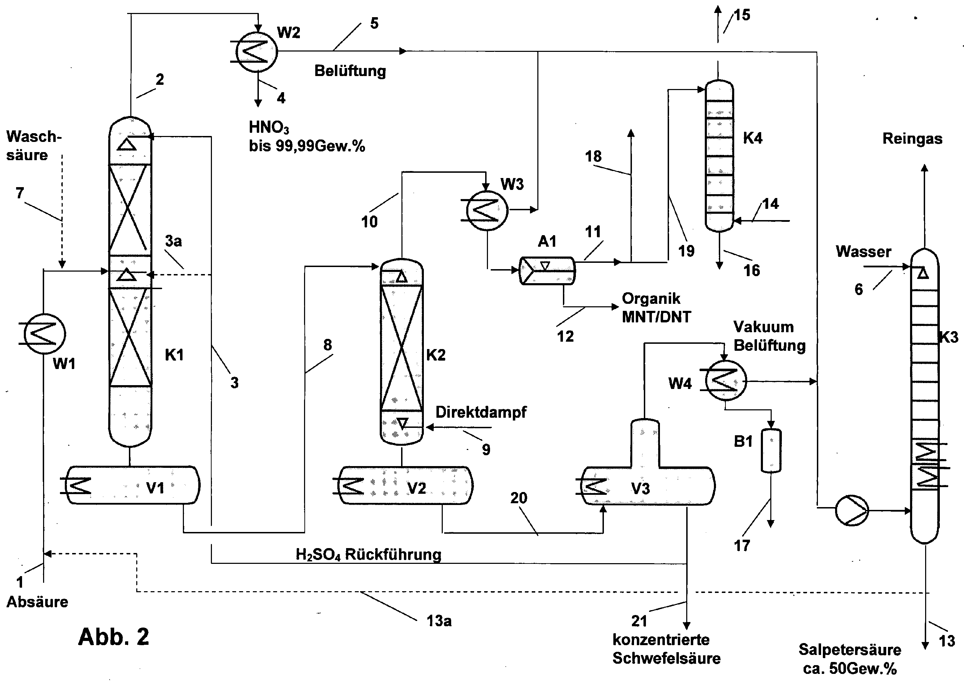

Im nachfolgenden Text werden zur Erläuterung teilweise die Symbole (Kₓ, Vₓ, Wₓ) und Bezugszeichen verwendet, bezüglich deren Bedeutung auf die Figuren, insbesondere Figur 2, verwiesen wird.

Bei einem erfindungsgemäßen Verfahren zur Aufarbeitung von Abfallsäure aus Verfahren der Herstellung von Nitroaromaten, insbesondere der Herstellung von Dinitrotoluol (DNT) oder Trinitrotoluol (TNT), unter Rückgewinnung von aufkonzentrierter und aufgereinigter Schwefelsäure und Salpetersäure, bei dem man in einer ersten Stufe die vorgewärmte Abfallsäure, die neben bis zu 80 Ma.-% Schwefelsäure und Wasser als weitere Bestandteile Salpetersäure (HNO₃), Nitrosylschwefelsäure (als HNO₂), und Nitroorganika, insbesondere DNT und Mononitrotoluol (MNT), enthält, in einer Strippkolonne im Gegenstrom zu Wasserdampf, der aus der im Sumpf der Strippkolonne durch Erhitzen vorkonzentrierten Schwefelsäure erhalten wird, in mindestens eine dampfförmige Phase (Brüden), die Salpetersäure sowie gegebenenfalls Nitroorganika enthält, sowie eine vorkonzentrierte Schwefelsäure auftrennt, und bei dem man in nachgeschalteten Verfahrensstufen (i) die aus dem Sumpf der Strippkolonne erhaltene vorkonzentrierte Schwefelsäure einer weiteren Reinigung zur Abtrennung von Nitroorganika und einer Höherkonzentrierung zuführt und (ii) die aus der dampfförmigen Salpetersäurephase gewonnene Salpetersäure sowie die Nitroorganika, einschließlich der bei der weiteren Reinigung und Aufkonzentrierung der vorkonzentrierten Schwefelsäure erhaltenen Nitroorganika, aufarbeitet und wieder in das Nitrierverfahren zurückführt, wird die obige Aufgabe erfindungsgemäß grundsätzlich dadurch gelöst, dass man in der ersten Stufe des Aufarbeitungsverfahrens zusätzlich zum Strippen der vorgewärmten Abfallsäure in einer Abtriebskolonne im Gegenstrom zu dem Wasserdampf aus der Schwefelsäurevorkonzentrierung (V1) eine Aufkonzentrierung der im Strippdampf enthaltenen Salpetersäure im Gegenstrom zu zusätzlicher aufgereinigter sowie gegebenenfalls frischer konzentrierter Schwefelsäure mit einer Konzentration im Bereich von 75 bis 97, vorzugsweise 80 bis 96 Ma.-% durchführt, und dass man die vom Kopf der Kolonne der ersten Stufe erhaltenen Salpetersäuredämpfe kondensiert und dabei eine Salpetersäure direkt in einer für eine Rückführung in das Nitrierverfahren vorteilhaften hochkonzentrierten Form gewinnt.

Dabei führt man in der ersten Stufe zusätzliche Schwefelsäure einer solchen Konzentration und Menge zu, dass der Partialdruck der Salpetersäure im Strippdampf am Kopf der Kolonne der ersten Stufe so erhöht wird, dass eine Salpetersäurekonzentration im Bereich von 40 bis 99,99 Ma.-% erhalten wird.

Die erste Stufe des Verfahrens kann, in Abhängigkeit von den speziellen Ausgangsbedingungen, auf unterschiedliche Weise ausgestaltet sein, die in der nachfolgenden Beschreibung im einzelnen erläutert werden.

Bei einer ersten Variante kann man die Abfallsäure und die zusätzliche Schwefelsäure im wesentlichen auf gleicher Höhe, vorzugsweise unter Verwendung eines geeigneten Verteilerbodens, dem Kopf einer Abtriebssäure zuführen. In diesem Fall steigen die Brüden aus dem Verdampfer der Abtriebssäure nicht nur im Gegenstrom zu der zusätzlichen Schwefelsäure nach oben, sondern auch im Gegenstrom zu der zugeführten Abfallsäure, die nach unten in den Verdampfer der Abtriebssäule abfließt. Bei dieser Variante des erfindungsgemäßen Verfahrens kann die Salpetersäure, die am Kopf der Abtriebssäule als Dampf abgezogen und kondensiert wird, bis auf ca. 70 Ma.-% konzentriert werden.

Bei einer anderen Variante der ersten Stufe, die auch in der Figur 2 gezeigt wird, führt man die Aufarbeitung der Abfallsäure in der ersten Stufe so durch, dass man die auf eine Temperatur knapp unter ihrer Siedetemperatur vorgewärmte Abfallsäure dem Mittelbereich einer ersten Kolonne (K1) zuführt, die einen unter dem Mittelbereich angeordneten Abtriebsteil zum Strippen der Abfallsäure im Gegenstrom zu Wasserdampf aus dem Sumpf (V1) und einen über dem Mittelbereich angeordneten Verstärkungsteil aufweist, und dass man die zusätzliche Schwefelsäure wenigstens teilweise dem Oberteil des Verstärkungsteils zuführt.

Bei einer weiteren Variante der ersten Stufe führt man die Aufarbeitung der Abfallsäure in der ersten Stufe so durch, dass man die auf eine Temperatur knapp unter ihrer Siedetemperatur vorgewärmte Abfallsäure dem Kopf einer Kolonne zuführt, die als Abtriebskolonne zum Strippen der Abfallsäure im Gegenstrom zum Wasserdampf aus dem Sumpf arbeitet und die an ihrem Kopf eine zusätzliche Abscheideeinrichtung zur Abtrennung einer flüssigen, Nitroorganika (MNT/DNT) enthaltenden Phase von der die Salpetersäure enthaltenden Dampfphase aufweist, und dass man die aus der Abtriebskolonne mit Abscheideeinreichtung erhaltene, die Salpetersäure enthaltende Dampfphase direkt einer getrennten Verstärkungssäule zuführt, deren Oberteil die zusätzliche konzentrierte Schwefelsäure zugeführt wird, wobei man die sich im Unterteil der Verstärkungssäule sammelnde Schwefelsäure in die Abtriebssäule überführt und letztlich mit der Schwefelsäure im Sumpf der Abtriebssäule vereinigt.

Die erste Stufe des Verfahrens führt man vorzugsweise bei einem Druck im Bereich vom 600 bis 2000 mbar, besonders bevorzugt bei atmosphärischem Druck, durch.

Die im Sumpf der Kolonne der ersten Stufe erhaltene vorkonzentrierte Schwefelsäure führt man im Rahmen eines bevorzugten Gesamtverfahrens dem Oberteil einer weiteren Strippkolonne (K2) zu, die bei Unterdruck zwischen 250 mbar und 550 mbar betrieben wird, wobei man in dieser weiteren Strippkolonne aus der vorgereinigten Schwefelsäure im Gegenstrom zu der Dampfphase aus dem beheizten Sumpf (V2) dieser Strippkolonne (K2) sowie gegebenenfalls zu zusätzlichem Direktdampf, vorzugsweise in einer Menge von bis zu 10 Ma.-% der Menge an vorgereinigter Schwefelsäure, die der Strippkolonne zugeführt wird, restliche Mengen an Nitroorganika ausstrippt, wobei man durch Kondensation der am Kopf der weiteren Strippkolonne (K2) erhaltenen Dampfphase ein saures wässriges Nitroorganika-Kondensat und aus ihrem Sumpf (V2) eine gereinigte Schwefelsäure erhält.

In das Verfahren ist ein Abscheider (A1) für die Auftrennung des sauren Kondensats aus der weiteren Strippkolonne (K2) integriert, wobei in dem Abscheider eine Auftrennung in eine Nitroorganika-Phase, die in das Nitrierverfahren rückführbar ist, und in eine wässrige Phase erfolgt, die Restmengen an Nitroorganika enthält.

Die die Restmengen an Nitroorganika enthaltende wässrige Phase aus dem Abscheider (A1) wird teilweise zur DNT-Wäsche im Nitrierverfahren verwendet, wobei man den überwiegenden restlichen Teil dieser Phase zu ihrer weiteren Aufreinigung einer Kolonne (K4) zur Flüssig/Flüssig-Extraktion unter Verwendung eines aromatischen organischen Extraktionsmittels, beispielsweise von MNT oder Toluol, vorzugsweise von Toluol, zuführen kann, und die dabei erhaltene, mit Nitroorganika beladene Extraktionsmittelphase vorzugsweise in das Nitrierverfahren zurück führt.

Es trägt zur Effizienz des Gesamtverfahrens bei, wenn man der Abfallsäure vor ihrer Aufarbeitung in der ersten Stufe des Verfahrens auch die Waschsäure aus der Stufe der Wäsche des DNT im Nitrierverfahren zusetzt.

Die bei der Kondensation der Salpetersäuredämpfe sowie ggf. auf anderen Stufen des Verfahrens als Belüftungen erhaltenen stickoxidhaltigen Gasphasen wäscht man vorzugsweise in einer Waschsäule (K3) bei einem Überdruck im Bereich von 1 bis 7 bar mit Wasser und gewinnt dadurch eine weitere Menge an wässriger Salpetersäure, die man je nach ihrer Konzentration und den speziellen Gegebenheiten des jeweiligen Verfahrens in die Nitrierung zurückführen kann oder der Abfallsäure zusetzt, die in die erste Stufe des erfindungemäßen Verfahrens eingeführt wird.

Die Kondensation der Dampfphasen (Brüden) der ersten Stufe und/oder der zusätzlichen Strippkolonne (K2) führt man in mit Warmwasser gespeisten Wärmetauscher-Kondensatoren (W2, W3) durch, um eine Abscheidung von festem DNT zu verhindern, wobei man die Temperatur des Warmwassers für die Wärmetauscher-Kondensatoren (W2, W3) in einem oder mehreren separaten Warmwasserkreisläufen durch Zugabe von kaltem Kühlwasser im Bereich vom 45°C und 70°C hält.

Als zusätzliche Schwefelsäure, die in die erste Stufe des erfindungsgemäßen Verfahrens eingeführt wird, verwendet man vorzugsweise eine bei der Aufarbeitung der Abfallsäure wieder gewonnene gereinigte und hochkonzentrierte Schwefelsäure. Die gereinigte Schwefelsäure, die als Sumpfprodukt der weiteren Strippkolonne (K2) erhalten wird, wird in mindestens einem weiteren Verdampfer (V3) bei einem Vakuum zwischen 160 und 10 mbar auf eine Konzentration zwischen 80 und 97 Ma.-% aufkonzentriert und, wie erwähnt, wenigstens teilweise als zusätzliche Schwefelsäure in der ersten Stufe des Verfahrens eingesetzt. Das auf dieser Stufe erhaltene Kondensat der Dampfphase aus dem weiteren Verdampfer (V3) enthält nur noch einen Restgehalt an DNT von weniger als 150 ppm und kann daher problemlos einer weiteren biologischen Abwasserreinigung zugeführt werden.

Die Erwärmung der Abfallsäure vor ihrem Eintritt in die Kolonne der ersten Stufe erfolgt vorzugsweise durch Wärmeaustausch (W1) mit der heißen aufkonzentrierten Schwefelsäure aus dem Verdampfer (V3).

Die Strippkolonnen (K1, K2) und ihre Einbauten, z.B. Verteiler und Träger, sowie darin verwendete Füllkörper oder strukturierte Packungen sind aus korrosionsbeständigen Materialien hergestellt, wobei die bevorzugten korrosionsbeständigen Materialien ausgewählt sind aus Glas, Keramikwerkstoffen und/oder Stahl, der mit Email oder Fluorkohlen(wasser)stoffpolymeren beschichtet oder ausgekleidet ist.

Eine typische Anlage zur Durchführung eines erfindungsgemäßen Verfahrens weist - neben (a) einer ersten Strippkolonne (K1) mit einer Zuleitung (1) für eine aufzuarbeitenden Abfallsäure, einem zugeordneten Verdampfer (V1) zur Gewinnung einer vorkonzentrierten Schwefelsäure und einer Ableitung (2) am Kopf der Strippkolonne für eine Salpetersäure enthaltende Dampfphase, (b) einer weiteren Strippkolonne (K2) mit einem zugeordneten Verdampfer (V2) zur Herstellung einer gereinigten Schwefelsäure, (c) mindestens einem weiteren Verdampfer (V3) zur Hochkonzentrierung der gereinigten Schwefelsäure, (d) Wärmetauschern-Kondensatoren (W2, W3, W4) für die Dampfphasen, die als Kopfprodukte der Strippkolonnen (K1, K2) und Verdampfer (V3) erhalten werden, gegebenenfalls (e) einer Waschkolonne (K3) zum Waschen von Stickoxide enthaltenden Abgasen, (f) den erforderlichen Rohrleitung zum Einspeisen der Einsatzprodukte (1, 7), zum Transport und zur Verteilung und Ableitung der als Verfahrensströme erhaltenen Dampfphasen und flüssigen Phasen (2, 5, 8, 10, 21) und der Verfahrensprodukte und Abgase (4, 12, 13, 17, 18, 21), sowie (g) den erforderlichen Heiz-, Kühl- und Druckregeleinrichtungen - als besonderes Merkmal auf, dass die erste Strippkolonne (K1) mit einer Zuleitung (3, 3a) für eine hochkonzentrierte gereinigte Schwefelsäure, vorzugsweise für eine, die bei der Aufarbeitung der Abfallsäure im mindestens einen Verdampfer (V3) erzeugt wurde, versehen ist.

Die Zuleitung (3, 3a) ist mit dem Kopf und gegebenenfalls dem Mittelteil der ersten Kolonne (K1) verbunden. Die erste Kolonne ist gemäß einer Variante in eine Kolonne mit einem unter der Zuleitung liegenden Abtriebsteil und eine separate Kolonne, die als Verstärkungsteil dient, aufgeteilt, wobei im Oberteil des Abtriebsteils eine Abscheideeinrichtung in Form eines Quenchers oder Dephlegmators zur Abtrennung einer Nitroorganika enthaltenden wässrigen Phase angeordnet ist, und wobei die Zuleitung für die hochkonzentrierte, gereinigte Schwefelsäure mit dem Verstärkungsteil verbunden ist.

Die Anlage kann gemäß einer besonderen bevorzugten

Ausgestaltung zusätzlich eine Extraktionssäule (K4) mit einem Extraktionsmitteleinlass (14) für eine Flüssig/- Flüssigextraktion einer wässrigen Phase aufweisen, die durch Phasentrennung des sauren Kondensats aus der zweiten Strippkolonne (K2) in einem Abscheider (A1) erhalten wurde.

Nachfolgend wird eine derzeit bevorzugte Ausführungsform des erfindungsgemäßen Verfahrens unter Bezugnahme auf die Figuren, insbesondere auf Figur 2, noch näher erläutert.

Eine Abfallsäure 1 aus der Nitrierung von Aromaten wird nach Vorwärmung in einem Wärmetauscher W1 einer unter atmosphärischen Bedingungen betriebenen ersten Kolonne K1 zugeführt, die als Strippkolonne arbeitet. Die Menge des aufsteigenden Wasserdampfs, der bei der Konzentrierung der Schwefelsäure im Sumpf V1 der Kolonne K1 erzeugt wird, wird bei dem Strippen, wie an sich bekannt, so eingestellt, dass eine möglichst hohe Konzentration an Salpetersäure in der Dampfphase (den Brüden) 2 erreicht wird, die am Kolonnenkopf abgezogen wird.

Bei einer Konzentration der Salpetersäure in der Abfallsäure von etwa 2 Ma.-% wird am Kopf der Kolonne eine Konzentration an Salpetersäure von max. 40 Ma.-% erreicht. Liegt die Ausgangskonzentration in der Absäure aber unter 1%, was meist der Fall ist, so können am Kopf der Kolonne nur noch Salpetersäurekonzentrationen von kleiner 10 Ma.-% erreicht werden.

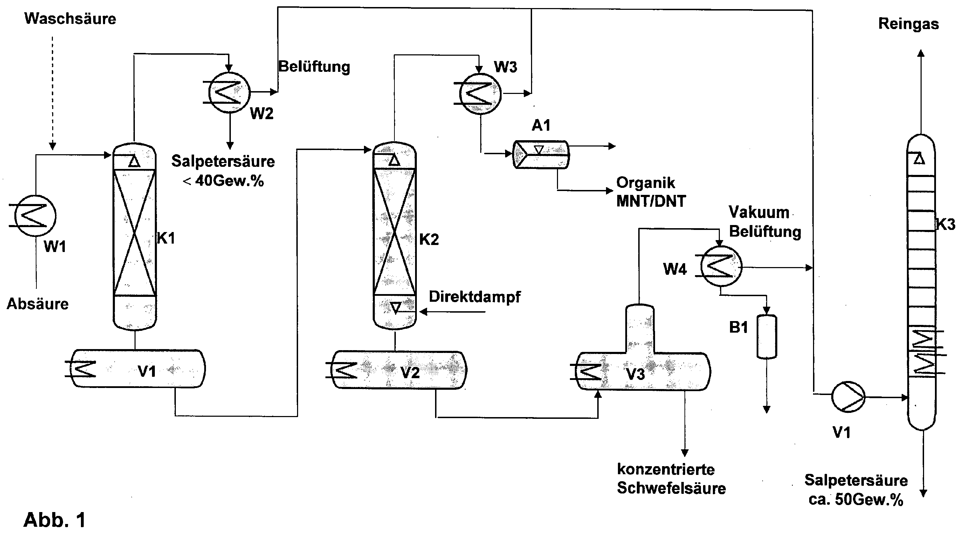

Da unter den Bedingungen der Praxis die Konzentrationen der aus dem Nitrierverfahren zulaufenden Abfallsäure jedoch nicht immer konstant sind und stark schwanken können, werden bei dem herkömmlichen Verfahren, wie es in Figur 1 vereinfacht dargestellt ist, über die Zeit sehr unterschiedliche Salpetersäurekonzentrationen erhalten, was zur Folge hat, dass bei einem bekannten Verfahren z.B. gemäß Figur 1 stets noch eine zusätzliche (nicht gezeigte) Kolonne zur Hochkonzentrierung der aus der Strippkolonne K1 erhaltenen verdünnten Salpetersäure benötigt wird, was mit den bekannten Problemen wie der Nitrat/Nitrit-Bildung verknüpft ist.

Die Erfinder haben nunmehr gefunden, dass die obigen Probleme überraschender Weise auch ohne Einsatz einer zusätzlichen Kolonne zur Hochkonzentrierung gelöst werden können, indem immer dann, wenn die Konzentration der Schwefelsäure in der Abfallsäure einen bestimmten Wert nicht unterschreitet, die erreichbare Salpetersäurekonzentration am Kopf der Kolonne K1 konstant gehalten werden kann und man gleichzeitig im Sumpf der Kolonne K1 eine vorgereinigte Schwefelsäure frei von Salpetersäure erhält.

Durch Rückführung von Schwefelsäure 3 aus der Schwefelsäure-konzentrierung bei V3 oder gegebenenfalls durch Zugabe frischer konzentrierter Schwefelsäure jeweils mit einer Konzentration von 75 bis 97, vorzugsweise 80 bis 96 Ma.-% kann man die zulaufende Abfallsäure so einstellen, dass man eine Salpetersäure 4 mit bis zu 99,99 Ma.-% erhält.

Dabei kann man erfindungsgemäß bis zu einer Konzentration der Salpetersäure im Dampf der Strippkolonne (den Brüden) von 70% so arbeiten, dass man die Schwefelsäure auf im wesentlichen gleicher Höhe wie die aufzuarbeitende Abfallsäure auf den Kopf einer Abtriebssäule aufgibt, wobei man einen Verteilerboden für zwei verschiedene flüssige Feedprodukte, z.B. einen Verteilerboden der Anmelderin mit der Handelsbezeichnung "Core-Tray", verwendet.

Wenn eine höhere Konzentration der Salpetersäure von bis zu 99,99 Ma.-% gewünscht wird, muss die konzentrierte Schwefelsäure gemäß 3 am Kopf einer ergänzenden Verstärkungssäule, d.h. am Kopf eines Kolonnenabschnitts über dem Zulauf der Abfallsäure 1, der im Mittelteil einer in einen Abtreibsteil und einen Verstärkungsteil aufgeteilten Kolonne (K1) angeordnet ist, aufgeben werden.

Die bei der Zersetzung der in der Abfallsäure enthaltenen Nitrosylschwefelsäure freiwerdenden nitrosen Gase 5 (NOx) treten mit den Salpetersäuredämpfen (Brüden) am Kopf der Kolonne K1 aus und werden, gemäß einer bevorzugten Ausführungsform, nach Kondensation des Gemisches aus Salpetersäure, Wasser und Nitroaromaten im Wärmetauscher-Kondensator W2 einer NOx-Absorption in einer besonderen Kolonne K3 zugeführt, in der das NOx Gas mit Wasser 6 bei erhöhtem Druck wieder als Salpetersäure 13 zurück gewonnen wird. Ein Teil dieser Säure 13a, oder ihre Gesamtmenge, kann zur weiteren Aufkonzentrierung wieder der ersten Kolonne zugeführt werden, oder die Säure 13 wird ohne zusätzliche Aufkonzentrierung als Strom der Nitrierung zugeführt. Letztere Variante hat aber den Nachteil, dass eine höhere Wassermenge zurückgeführt wird und sich dadurch die Flüssigkeitsmenge im Abfallsäurekreislauf erhöht.

Liegen die Anteile an Nitroaromaten in der Abfallsäure im Bereich so hoher Mengen, dass sie zu Sicherheitsbedenken Anlass geben, entfernt man aus Sicherheitsgründen vor der überazeotropen Hochkonzentrierung im Verstärkungsteil, d.h. zwischen Verstärkungs- und Abtriebsteil, die organischen Nitroverbindungen durch geeignete Maßnahmen, z.B. durch Anordnung einer Quenche oder eines Dephlegmators, fast vollständig.

Ein zusätzlicher erheblicher Vorteil dieser Fahrweise ist es, dass man kein zusätzliches Abwasser erzeugt, dass hochgiftiges Nitrit/Nitrat enthält.

Es liegt im Rahmen der vorliegenden Erfindung, auch die Waschsäure 7 aus der DNT-Wäsche des Nitrierverfahrens wenigstens teilweise zusammen mit der Abfallsäure der ersten Kolonne K1 zur Abtrennung und Konzentrierung der Salpetersäure und zur Vorkonzentrierung der Schwefelsäure, wie vorher beschrieben, zuzuführen. Dadurch ist es erfindungsgemäß möglich, diese Säuren ohne zusätzlich erzeugtes Nitrat/Nitrit Abwasser zurückzugewinnen und zu konzentrieren.

Die im Sumpf V1 der ersten Kolonne K1 erhaltene vorkonzentrierte, aber nitratfreie Abfallsäure 8 in Form einer vorgereinigten und vorkonzentrierten Schwefelsäure wird nun einer bei Unterdruck betriebenen weitern Strippkolonne K2 zugeleitet, um die restlichen organischen Nitroverbindungen, insbesondere DNT, durch Strippung vollständig zu entfernen.

Die Kolonne K2 wird, um oberhalb des Gefrierpunkts bzw. Festpunkts von wasserdampfflüchtigen aromatischen Nitroverbindungen zu arbeiten, d.h. von DNT, bei einem Unterdruck zwischen 250 mbar und 550 mbar betrieben, bevorzugt zwischen 300 und 450 mbar. Dabei wurde überraschend gefunden, dass man, im Gegensatz zur Lehre im Dokument DE 10 2006 013 579 B3, zusätzlich zum Brüden aus dem Sumpfverdampfer V2 der Kolonne K2 bei der gleichzeitigen Konzentrierung der Schwefelsäure auch noch geringe Mengen an zusätzlichem Direktdampf 9, einem sogenannten Lifesteam, benötigt, um im Sumpf V2 eine Schwefelsäure zu erhalten, die frei von DNT (kleiner 20 Ma.-ppm) ist. Die verwendete Direktdampfmenge kann je nach Zulaufzusammensetzung der vorkonzentrierten Abfallsäure zwischen 0 und 9,99% der Zulauf-Abfallsäure betragen.

Die im Brüden 10 der Vakuum Strippkolonne K2 enthaltenen Bestandteile wie hauptsächlich Wasser, Nitroaromaten wie MNT/DNT und Spuren Schwefelsäure werden in einem Wärmetauscher-Kondensator W3 mit im Kreislauf geführten Warmwasser als Kühlmedium indirekt kondensiert und in einem Abscheider A1 in eine saure wässrige Phase und eine organische Verbindungen enthaltende Phase getrennt. Das dabei erhaltene wässrige Kondensat ist schwach schwefelsauer und enthält nur noch Spuren von organischen Verunreinigungen (ca. 1500 Ma.-ppm DNT). Es kann wenigstens teilweise, per Transport durch eine Leitung 18, zur sauren Wäsche des DNT in der Nitrierung wieder verwendet werden. Der restliche Teil des sauren Kondensats 19 mit den schwer abbaubaren Nitroaromaten MNT/DNT, der nur sehr energieaufwändig thermisch oder thermochemisch behandelt werden könnte, kann gemäß einer besonderen Variante des erfindungsgemäßen Verfahrens durch eine nachgeschaltete Extraktion in einer Säule zur Gegenstrom-Flüssigkeitsextration mit einem flüssigen Extraktionsmittel 14, bevorzugt einem aromatischen Extraktionsmittel wie Toluol oder MNT, soweit gereinigt werden, dass ein Abwasser 16 erhalten wird, das eine Konzentration an Nitroaromaten, wie DNT, von nur bis zu 1 Ma.-ppm aufweist, und das einer einfachen biologischen Abwasserreinigung zugeführt werden kann.

Das mit den extrahierten Nitroaromaten beladene Extraktionsmittel 15 wird vorzugsweise in die Monostufe der Nitrierung zurückgefahren.

Die abgeschiedenen Nitroaromaten 12 wie MNT/DNT aus dem Abscheider (Separator) A1 werden ebenfalls wieder der Nitrierung zugeleitet.

Es wurde ferner überraschend gefunden, dass es bei bestimmten Zusammensetzungen der Abfallsäure, speziell bei einem Salpetersäuregehalt von mehr als 2 Ma.-.%, sogar möglich ist, die erste Kolonne K1 und die Vakuum-Strippkolonne K2 zusammen zu legen, wobei unter den genannten Voraussetzung die gleichen vorteilhaften Ergebnisse erhalten werden können wie bei den vorher beschriebenen Ausführungsformen.

Die im Sumpf der Kolonne K2 erhaltene, quasi DNT-freie, aufkonzentrierte Schwefelsäure 20 wird einer ein- oder mehrstufigen Vakuum-Konzentrierung zugeleitet und bei einem Vakuum zwischen 160 mbar und 10 mbar auf eine Konzentration zwischen 85 Ma.-% und 97 Ma.-% gebracht. Die so konzentrierte Schwefelsäure 21, die frei von DNT ist, kann erneut der Nitrierung zugeführt werden, wird jedoch im Rahmen des erfindungsgemäßen Verfahrens vorzugsweise wenigstens teilweise als zusätzliche Schwefelsäure verwendet, die man über Leitungen 3 oder 3a der Kolonne K1 der ersten Verfahrensstufe des erfindungsgemäßen Verfahrens zuführt.

Durch das erfindungsgemäße fast vollständige Strippen des DNT in der Kolonne K2 enthält die Dampfphase der Vakuum-Konzentrierstufen V3 nur sehr geringe Mengen an DNT, von kleiner 150 Ma.-ppm, und nach der Kondensation in einem Wärmetauscher-Kondensator W4 kann das wässrige Kondensat über einen Kondensatbehälter B1 als Strom 17 direkt einer biologischen Abwasserreinigung zugeleitet werden.

Wichtige Vorteile des erfindungsgemäßen Verfahrens lassen sich wie folgt zusammenfassen:
Bei dem erfindungsgemäßen Verfahren wird bereits in der ersten Stufe, bei der ersten Strippung, die vorzugsweise unter Atmosphärendruck abläuft, die gesamte Salpetersäure in konzentrierter Form zurück gewonnen, so dass im Gegensatz zu einem Verfahren, wie es in der Patentschrift DE 10 2006 013 579 B3 beschrieben wird, keine weitere separate Aufkonzentrierung der verdünnten Salpetersäure mit dem Nachteil einer Erzeugung von Nitrat/Nitrit enthaltendem Abwasser, erforderlich ist.

Erfindungsgemäß wird eine Hochkonzentrierung der Salpetersäure überazeotrop bis auf 99,99 Ma.-% durch Rückführung eines Teils der im Konzentrierkreislauf befindlichen konzentrierten Schwefelsäure erreicht, so dass kein dem Gesamtverfahren fremdes zusätzliches Material eingesetzt werden muss.

Nach dem erfindungsgemäßen Verfahren wird ferner im Gegensatz zum Verfahren gemäß Patentschrift DE 196 36191 B4 die benötigte Direktdampfmenge und damit die erzeugte Menge an belastetem Abwasser stark reduziert. In einem besonders günstigen Konzentrationsbereich der Schwefelsäure in der Abfallsäure von ca. 67 Gew.% am Eintritt zur Strippkolonne K2 kann ganz auf zusätzlichen Direktdampf verzichtet werden, wobei aber erfindungsgemäß in der Kolonne, im Gegensatz zu Patentschrift DE 10 2006 013 579 B3, die eine Menge an Strippdampf von 5 bis 10%, bezogen auf die zulaufende Abfallsäuremenge, lehrt, immer ein Brüdenanteil von größer 10 Ma.-% der zulaufenden Abfallsäuremenge vorhanden sein muss, wie erfindungsgemäß durch Versuche festgestellt wurde.

## Patentansprüche

1. Verfahren zur Aufarbeitung von Abfallsäure aus Verfahren der Herstellung von Nitroaromaten, insbesondere der Herstellung von Dinitrotoluol (DNT) oder Trinitrotoluol (TNT), unter Rückgewinnung von aufkonzentrierter und aufgereinigter Schwefelsäure und Salpetersäure,
bei dem man in einer ersten Stufe die vorgewärmte Abfallsäure, die neben bis zu 80 Ma.-% Schwefelsäure und Wasser als weitere Bestandteile Salpetersäure (HNO₃), Nitrosylschwefelsäure (als HNO₂), und Nitroorganika, insbesondere DNT und Mononitrotoluol (MNT), enthält, in einer Strippkolonne im Gegenstrom zu Wasserdampf, der aus der im Sumpf der Strippkolonne durch Erhitzen der vorkonzentrierten Schwefelsäure erhalten wird, in mindestens eine dampfförmige Phase, die Salpetersäure sowie gegebenenfalls Nitroorganika enthält, sowie eine vorkonzentrierte Schwefelsäure auftrennt,
und man in nachgeschalteten Verfahrensstufen (i) die aus dem Sumpf der Strippkolonne erhaltene vorkonzentrierte Schwefelsäure einer weiteren Reinigung zur Abtrennung von Nitroorganika und einer Höherkonzentrierung zuführt und (ii) die aus der dampfförmigen Salpetersäurephase gewonnene Salpetersäure sowie die Nitroorganika, einschließlich der bei der weiteren Reinigung und Aufkonzentrierung der vorkonzentrierten Schwefelsäure erhaltenen Nitroorganika, aufarbeitet und wieder in das Nitrierverfahren zurückführt,
**dadurch gekennzeichnet, dass** man
in der ersten Stufe des Verfahrens zusätzlich zum Strippen der vorgewärmten Abfallsäure in einer Abtriebskolonne im Gegenstrom zu dem Wasserdampf aus der Schwefelsäurevorkonzentrierung (V1) eine Aufkonzentrierung der im Strippdampf enthaltenen Salpetersäure im Gegenstrom zu zusätzlicher aufgereinigter sowie gegebenenfalls frischer konzentrierter Schwefelsäure mit einer Konzentration im Bereich von 75 bis 97, vorzugsweise 80 bis 96 Ma.-% durchführt, und dass man die vom Kopf der Kolonne der ersten Stufe erhaltenen Salpetersäuredämpfe kondensiert und dabei eine Salpetersäure direkt in einer für eine Rückführung in das Nitrierverfahren geeigneten hochkonzentrierten Form gewinnt.

2. Verfahren nach Anspruch 1, **dadurch gekennzeichnet, dass** man in der ersten Stufe zusätzliche Schwefelsäure einer solchen Konzentration und Menge zuführt, dass der Partialdruck der Salpetersäure im Strippdampf am Kopf der Kolonne der ersten Stufe so erhöht wird, dass eine Salpetersäurekonzentration im Bereich von 40 bis 99,99 Ma.-% erhalten wird.

3. Verfahren nach Anspruch 1 oder 2, **dadurch gekennzeichnet, dass** man zur Herstellung einer Salpetersäure bis zu einer Konzentration von etwa 70 Ma.-% die Abfallsäure und die zusätzliche Schwefelsäure auf etwa gleicher Höhe auf den Kopf einer Abtriebssäule aufgibt und man die die aufkonzentrierte Salpetersäure bildende Dampfphase am Kopf dieser Abtriebssäule abzieht.

4. Verfahren nach Anspruch 1 oder 2, **dadurch gekennzeichnet, dass** man die Aufarbeitung der Abfallsäure in der ersten Stufe so durchführt, dass man die auf eine Temperatur knapp unter ihrer Siedetemperatur vorgewärmte Abfallsäure dem Mittelbereich einer ersten Kolonne (K1) zuführt, die einen unter dem Mittelbereich angeordneten Abtriebsteil zum Strippen der Abfallsäure im Gegenstrom zu Wasserdampf aus dem Sumpf (V1) und einen über dem Mittelbereich angeordneten Verstärkungsteil aufweist, und dass man die zusätzliche Schwefelsäure wenigstens teilweise dem Oberteil des Verstärkungsteils zuführt.

5. Verfahren nach Anspruch 1 oder 2, **dadurch gekennzeichnet, dass** man die Aufarbeitung der Abfallsäure in der ersten Stufe so durchführt, dass man die auf eine Temperatur knapp unter ihrer Siedetemperatur vorgewärmte Abfallsäure dem Kopf einer Kolonne zuführt, die als Abtriebskolonne zum Strippen der Abfallsäure im Gegenstrom zum Wasserdampf aus dem Sumpf arbeitet und die an ihrem Kopf eine zusätzliche Abscheideeinrichtung zur Abtrennung einer flüssigen, Nitroorganika (MNT/DNT) enthaltenden Phase von der Salpetersäure enthaltenden Dampfphase aufweist, und dass man die aus der Abtriebskolonne und Abscheideeinrichtung erhaltene, die Salpetersäure enthaltende Dampfphase direkt einer Verstärkungssäule zuführt, deren Oberteil die zusätzliche konzentrierte Schwefelsäure zugeführt wird, wobei man die im Unterteil der Verstärkungssäule erhaltene Schwefelsäure in die Abtriebssäule überführt und letztlich mit der Schwefelsäure im Sumpf der Abtriebssäule vereinigt.

6. Verfahren nach einem der Ansprüche 1 bis 5, **dadurch gekennzeichnet, dass** man die erste Stufe des Verfahrens bei einem Druck im Bereich vom 600 bis 2000 mbar, vorzugsweise bei atmosphärischem Druck, durchführt.

7. Verfahren nach einem der Ansprüche 1 bis 6, **dadurch gekennzeichnet, dass** man die im Sumpf der Kolonne der ersten Stufe erhaltene vorkonzentrierte Schwefelsäure dem Oberteil einer weiteren Strippkolonne (K2), die bei Unterdruck zwischen 250 mbar und 550 mbar betrieben wird, zuführt und dass man in dieser weiteren Strippkolonne im Gegenstrom zu der Dampfphase aus dem beheizten Sumpf (V2) dieser Strippkolonne (K2), gegebenenfalls unter Erhöhung des Dampfanteils durch zusätzlichen Direktdampf, aus der vorgereinigten Schwefelsäure restliche Mengen an Nitroorganika ausstrippt, wobei man durch Kondensation der am Kopf der weiteren Strippkolonne (K2) erhaltenen Dampfphase ein saures wässriges Nitroorganika-Kondensat und aus ihrem Sumpf (V2) eine gereinigte Schwefelsäure erhält.

8. Verfahren nach einem der Ansprüche 1 bis 7, **dadurch gekennzeichnet, dass** in das Verfahren ein Abscheider (A1) für die Auftrennung des sauren Kondensats aus der weiteren Strippkolonne (K2) integriert ist, wobei in dem Abscheider eine Auftrennung in eine Nitroorganika-Phase, die in das Nitrierverfahren rückführbar ist, und in eine wässrige Phase erfolgt, die Restmengen an Nitroorganika enthält.

9. Verfahren nach Anspruch 8, **dadurch gekennzeichnet, dass** man die Restmengen an Nitroorganika enthaltender wässrige Phase aus dem Abscheider (A1) teilweise zur DNT-Wäsche im Nitrierverfahren verwendet und man den übrigen Teil wenigstens teilweise zu seiner weiteren Aufreinigung einer Kolonne (K4) zur Flüssig/Flüssig-Extraktion unter Verwendung eines aromatischen organischen Extraktionsmittels, vorzugsweise von Toluol, zuführt, und dass man die dabei erhaltene, mit Nitroorganika beladene Extraktionsmittelphase dem Nitrierverfahren zuführt.

10. Verfahren nach einem der Ansprüche 1 bis 9, **dadurch gekennzeichnet, dass** man der Abfallsäure vor ihrer Aufarbeitung in der ersten Stufe des Verfahrens Waschsäure aus der Stufe der Wäsche des DNT im Nitrierverfahren zusetzt.

11. Verfahren nach einem der Ansprüche 1 bis 10, **dadurch gekennzeichnet, dass** man die bei der Kondensation der Salpetersäuredämpfe sowie ggf. auf anderen Stufen des Verfahrens als Belüftungen erhaltenen stickoxidhaltigen Gasphasen in einer Waschsäule (K3) bei einem Überdruck im Bereich von 1 bis 7 bar mit Wasser wäscht und dadurch eine weitere Menge an wässriger Salpetersäure gewinnt.

12. Verfahren nach einem der Ansprüche 1 bis 11, **dadurch gekennzeichnet, dass** man die Kondensation der Dampfphasen der ersten Stufe und/oder der zusätzlichen Strippkolonne (K2) in mit Warmwasser gespeisten Wärmetauscher-Kondensatoren (W2, W3) durchführt, um eine Abscheidung von festem DNT zu verhindern, wobei man die Temperatur des Warmwassers für die Wärmetauscher-Kondensatoren (W2, W3) in einem oder mehreren separaten Warmwasserkreisläufen durch Zugabe von kaltem Kühlwasser im Bereich vom 40°C bis 70°C hält.

13. Verfahren nach einem der Ansprüche 1 bis 12, **dadurch gekennzeichnet, dass** die gereinigte Schwefelsäure, die als Sumpfprodukt der weiteren Strippkolonne (K2) erhalten wird, in mindestens einem weiteren Verdampfer (V3) bei einem Vakuum zwischen 160 und 10 mbar auf eine Konzentration zwischen 85 und 97 Ma.-% aufkonzentriert wird und wenigstens teilweise als zusätzliche Schwefelsäure in der ersten Stufe des Verfahrens eingesetzt wird.

14. Verfahren nach einem der Ansprüche 1 bis 13, **dadurch gekennzeichnet, dass** die Strippkolonnen (K1, K2) und ihre Einbauten sowie darin verwendete Füllkörper oder strukturierte Packungen aus korrosionsbeständigen Materialien hergestellt sind, wobei die bevorzugten korrosionsbeständigen Materialien ausgewählt sind aus Glas, Keramikwerkstoffen und/oder Stahl, der mit Email oder Fluorkohlen(wasser)stoffpolymeren beschichtet oder ausgekleidet ist.

15. Anlage zur Durchführung eines Verfahrens zur Aufarbeitung von Abfallsäure aus Verfahren der Herstellung von Nitroaromaten, insbesondere der Herstellung von Dinitrotoluol (DNT) oder Trinitrotoluol (TNT), unter Rückgewinnung von aufkonzentrierter und aufgereinigter Schwefelsäure und Salpetersäure nach einem der Ansprüche 1 bis 14 mit:
- einer ersten Strippkolonne (K1) mit einer Zuleitung (1) für eine aufzuarbeitenden Abfallsäure, einem zugeordneten Verdampfer (V1) zur Gewinnung einer vorkonzentrierten Schwefelsäure und einer Ableitung (2) für eine Salpetersäure enthaltenden Dampfphase aus dem Kopf dieser ersten Strippkolonne (K1),
- einer weiteren Strippkolonne (K2) mit einem zugeordneten Verdampfer (V2) zur Herstellung einer gereinigten Schwefelsäure aus der vorkonzentrierten Schwefelsäure aus dem Verdampfer (V1) der ersten Strippkolonne (K1), die dem Kopf dieser weiteren Strippkolonne (K2) zugeführt wird, sowie
- mindestens einem weiteren Verdampfer (V3) zur Hochkonzentrierung der gereinigten Schwefelsäure aus dem Verdampfer (V2) der weiteren Strippkolonne (K2), sowie
- Wärmetauschern-Kondensatoren (W2, W3, W4) für die Dampfphasen, die als Kopfprodukte der Strippkolonnen (K1, K2) und Verdampfer (V3) erhalten werden, sowie gegebenenfalls
- einer Waschkolonne (K3) zum Waschen von Stickoxide enthaltenden Abgasen, sowie
- den erforderlichen Rohrleitung zum Einspeisen der Einsatzprodukte (1, 7), zum Transport und zur Verteilung und Ableitung der als Verfahrensströme erhaltenen Dampfphasen und flüssigen Phasen (2, 5, 8, 10, 21) und Verfahrensprodukte und Abgase (4, 12, 13, 17, 18, 21), und
- den erforderlichen Heiz-, Kühl- und Druckregeleinrichtungen,
**dadurch gekennzeichnet, dass**
die erste Strippkolonne (K1) mit einer Zuleitung (3) für eine hochkonzentrierte gereinigte Schwefelsäure aus dem weiteren Verdampfer (V3) versehen ist, die mit dem Kopf der ersten Strippkolonne (K1) verbunden ist.

16. Anlage nach Anspruch 15, **dadurch gekennzeichnet, dass** die erste Strippkolonne in eine Abtriebskolonne und eine Verstärkungskolonne aufgeteilt ist, wobei im Oberteil des Abtriebsteils eine Abscheideeinrichtung in Form eines Quenchers oder Dephlegmators zur Abtrennung einer Nitroorganika enthaltenden wässrigen Phase angeordnet ist, und dass der Kopf der Abtriebskolonne mit einer Verstärkungskolonne verbunden ist, die an ihrem Kopf die Zuleitung für die hochkonzentrierte, gereinigte Schwefelsäure aus dem weiteren Verdampfer (V3) aufweist.

17. Anlage nach Ansprüche 15 oder 16, **dadurch gekennzeichnet, dass** sie zusätzlich eine Extraktionssäule (K4) mit einem Extraktionsmitteleinlass (14) für eine Flüssig/- Flüssigextraktion einer wässrigen Phase aufweist, die durch Phasentrennung des sauren Kondensats aus der Dampfphase der zweiten Strippkolonne (K2) in einem Abscheider (A1) erhalten wurde.

## Claims

1. A process for working up waste acid from processes for preparation of nitroaromatics, especially for preparation of dinitrotoluene (DNT) or trinitrotoluene (TNT), to recover concentrated and purified sulfuric acid and nitric acid,
in which, in a first stage, the preheated waste acid which, as well as up to 80% by mass of sulfuric acid and water, as further constituents comprises nitric acid (HNO₃), nitrosylsulfuric acid (as HNO₂), and nitroorganics, especially DNT and mononitrotoluene (MNT), is separated in a stripping column in countercurrent to steam, which is obtained from the bottom of the stripping column by heating the pre-concentrated sulfuric acid, into at least one vaporous phase which comprises nitric acid with or without nitroorganics, and a pre-concentrated sulfuric acid,
and in which, in downstream process stages (i), the pre-concentrated sulfuric acid obtained from the bottom of the stripping column is supplied to a further purification for removal of nitroorganics and for higher concentration, and (ii) the nitric acid obtained from the vaporous nitric acid phase and the nitroorganics, including the nitroorganics obtained in the further purification and concentration of the pre-concentrated sulfuric acid, are worked up and recycled back into the nitration process,
**characterized in that**
in the first stage of the process, in addition to stripping of the preheated waste acid in a stripping column in countercurrent to the steam from the sulfuric acid preconcentration (V1), a concentration of the nitric acid present in the stripping vapor is performed in countercurrent to additional purified and optionally fresh concentrated sulfuric acid with a concentration in the range from 75 to 97% and preferably 80 to 96% by mass, and the nitric acid vapors obtained from the top of the column of the first stage are condensed to obtain a nitric acid directly in a highly concentrated form suitable for recycling into the nitration process.

2. The process as claimed in claim 1, **characterized in that**, in the first stage, additional sulfuric acid is supplied in such a concentration and amount that the partial pressure of the nitric acid in the stripping vapor at the top of the column of the first stage is increased so as to obtain a nitric acid concentration in the range from 40 to 99.99% by mass.

3. The process as claimed in claim 1 or 2, **characterized in that** a nitric acid up to a concentration of about 70% by mass is prepared by introducing the waste acid and the additional sulfuric acid at about the same height to the top of a stripping column, and drawing off the vapor phase which forms the concentrated nitric acid at the top of this stripping column.

4. The process as claimed in claim 1 or 2, **characterized in that** the workup of the waste acid in the first stage is performed by supplying the waste acid preheated to a temperature just below the boiling temperature thereof to the middle region of a first column (K1) which has a stripping section arranged below the middle region for stripping of the waste acid in countercurrent to steam from the bottom (V1) and a rectifying section arranged above the middle region, and the additional sulfuric acid is supplied at least partly to the upper part of the rectifying section.

5. The process as claimed in claim 1 or 2, **characterized in that** the workup of the waste acid in the first stage is performed in such a way that the waste acid preheated to a temperature just below the boiling temperature thereof is supplied to the top of a column which works as a stripping column for stripping of the waste acid in countercurrent to the steam from the bottom, and which has, at its top, an additional separation device for removal of a liquid phase comprising nitroorganics (MNT/DNT) from the vapor phase comprising nitric acid, and **in that** the vapor phase which comprises the nitric acid and is obtained from the stripping column and separation device is supplied directly to a rectifying column, the upper part of which is supplied with the additional concentrated sulfuric acid, the sulfuric acid obtained in the lower part of the rectifying column being transferred to the stripping column and ultimately being combined with the sulfuric acid in the bottom of the stripping column.

6. The process as claimed in any of claims 1 to 5, **characterized in that** the first stage of the process is performed at a pressure in the range from 600 to 2000 mbar, preferably at atmospheric pressure.

7. The process as claimed in any of claims 1 to 6, **characterized in that** the pre-concentrated sulfuric acid obtained in the bottom of the column of the first stage is fed to the upper part of a further stripping column (K2) which is operated at a reduced pressure between 250 mbar and 550 mbar, and residual amounts of nitroorganics are stripped out of the pre-purified sulfuric acid in this further stripping column in countercurrent to the vapor phase from the heated bottom (V2) of this stripping column (K2), optionally while increasing the steam content by additional direct steam, the vapor phase obtained at the top of the further stripping column (K2) being condensed to obtain an acidic aqueous nitroorganic condensate and, from the bottom (V2) thereof, a purified sulfuric acid.

8. The process as claimed in any of claims 1 to 7, **characterized in that** a separator (A1) for the separation of the acidic condensate from the further stripping column (K2) is integrated in the process, and a separation into a nitroorganic phase which can be recycled into the nitration process and into an aqueous phase comprising residual amounts of nitroorganics is effected in the separator.

9. The process as claimed in claim 8, **characterized in that** the residual amounts of aqueous phase comprising nitroorganics from the separator (A1) are used partly for DNT scrubbing in the nitration process, and the remaining portion is supplied at least partly, for further purification thereof, to a column (K4) for liquid/liquid extraction using an aromatic organic extractant, preferably toluene, and the resulting extractant phase laden with nitroorganics is supplied to the nitration process.

10. The process as claimed in any of claims 1 to 9, **characterized in that** the waste acid, before the workup thereof in the first stage of the process, is supplemented with scrubbing acid from the stage of scrubbing with DNT in the nitration process.

11. The process as claimed in any of claims 1 to 10, **characterized in that** the nitrogen oxide-containing gas phases obtained as vent gases in the condensation of the nitric acid vapors and if appropriate at other stages of the process are scrubbed with water in a scrubbing column (K3) at an elevated pressure in the range from 1 to 7 bar to obtain a further amount of aqueous nitric acid.

12. The process as claimed in any of claims 1 to 11, **characterized in that** the condensation of the vapor phases of the first stage and/or of the additional stripping column (K2) is conducted in warm water-fed heat exchanger-condensers (W2, W3), in order to prevent deposition of solid DNT, the temperature of the warm water for the heat exchanger-condensers (W2, W3) in one or more separate warm water circuits being kept within the range from 40°C to 70°C by addition of cold cooling water.

13. The process as claimed in any of claims 1 to 12, **characterized in that** the purified sulfuric acid which is obtained as a bottom product of the further stripping column (K2) is concentrated in at least one further evaporator (V3) at a vacuum between 160 and 10 mbar to a concentration between 85 and 97% by mass, and is used at least partly as additional sulfuric acid in the first stage of the process.

14. The process as claimed in any of claims 1 to 13, **characterized in that** the stripping columns (K1, K2) and internals thereof, and also random packings or structured packings used therein, are produced from corrosion-resistant materials, the preferred corrosion-resistant materials being selected from glass, ceramic materials and/or steel coated or lined with enamel or (hydro)fluorocarbon polymers.

15. A plant for performing a process for working up waste acid from processes for preparation of nitroaromatics, especially for preparation of dinitrotoluene (DNT) or trinitrotoluene (TNT), to recover concentrated and purified sulfuric acid and nitric acid according to any of claims 1 to 14, comprising
- a first stripping column (K1) with an feeding line (1) for a waste acid to be worked up, an associated evaporator (V1) for obtaining a pre-concentrated sulfuric acid and an outlet (2) for a vapor phase comprising nitric acid from the head of said first stripping column (K1),
- a further stripping column (K2) with an associated evaporator (V2) for preparation of a purified sulfuric acid from the pre-concentrated sulfuric acid from the evaporator (V1) of the first stripping column (K1), which is fed to the head of said further stripping column (K2), and
- at least one further evaporator (V3) for the increase in concentration of the purified sulfuric acid from the evaporator (V2) of the further stripping column (K2),
- heat exchanger-condensers (W2, W3, W4) for the vapor phases which are obtained as top products from the stripping columns (K1, K2) and evaporator (V3), and, optionally
- a scrubbing column (K3) for scrubbing off-gases containing nitrogen oxides, and
- the required piping for feeding in the starting materials (1, 7), for transporting and for distributing and leading off the vapor phases and liquid phases (2, 5, 8, 10, 21) obtained as process streams and process products and off-gases (4, 12, 13, 17, 18, 21) and
- the required heating, cooling and pressure regulation devices,
**characterized in that** the first stripping column (K1) is provided with a feeding line (3) for a highly concentrated purified sulfuric acid from the further evaporator (V3), which is connected to the top of the first stripping column (K1).

16. The plant as claimed in claim 15, **characterized in that** the first stripping column is divided into a stripping column and a rectifying column, with a separation device in the form of a quencher or dephlegmator arranged in the upper part of the stripping section for removal of an aqueous phase comprising nitroorganics, and **in that** the top of the stripping column is connected to a rectifying column which has, at its top, a feeding line for the highly concentrated, purified sulfuric acid from the further evaporator (V3).

17. The plant as claimed in any of claims 15 or 16, **characterized in that** it additionally has an extraction column (K4) with an extractant inlet (14) for a liquid/liquid extraction of an aqueous phase which has been obtained by phase separation of the acidic condensate from the vapor phase of the second stripping column (K2) in a separator (A1).

## Revendications

1. Procédé pour le retraitement de déchets acides provenant de procédures de fabrication de composés nitroaromatiques, en particulier de fabrication de dinitrotoluol (DNT) ou de trinitrotoluol (TNT), avec récupération d'acide sulfurique et d'acide nitrique concentré et purifié,
dans lequel, dans un premier étage, les déchets acides préchauffés, qui contiennent, outre de l'acide sulfurique en quantité jusqu'à 80 % en masse et de l'eau, de l'acide nitrique (HNO₃), de l'acide nitrosylsulfurique (sous forme de HNO₂) et des composés nitroorganiques, en particulier du DNT et du mononitrotoluol (MNT), sont séparés dans une colonne de stripage à contre-courant de vapeur d'eau, qui est obtenue à partir de la bâche de la colonne de stripage par chauffage de l'acide sulfurique préconcentré, en au moins une phase sous forme vapeur qui contient de l'acide nitrique ainsi que le cas échéant des composés nitroorganiques, ainsi qu'en acide sulfurique préconcentré,
et dans lequel, dans des étages de procédé successifs (i) on admet l'acide sulfurique préconcentré obtenu à partir de la bâche de la colonne de stripage à une nouvelle purification pour séparer les composés nitroorganiques et pour augmenter la concentration et (ii) on retraite l'acide nitrique récupéré à partir de la phase d'acide nitrique sous forme vapeur ainsi que les composés nitroorganiques, y compris les composés nitroorganiques obtenus lors de la nouvelle purification et l'augmentation de concentration de l'acide sulfurique préconcentré, et on les ramène à la procédure de nitruration,
**caractérisé en ce que**
dans le premier étage du procédé, en plus du stripage des déchets acides préchauffés, dans une colonne d'extraction et à contre-courant de la vapeur d'eau provenant de la préconcentration d'acide sulfurique (V1), on exécute une nouvelle concentration de l'acide nitrique contenu dans la vapeur de stripage à contre-courant d'acide sulfurique additionnel purifié et le cas échéant fraîchement concentré avec une concentration dans la plage de 75 à 97, et de préférence de 80 à 96 % en masse, et **en ce que** l'on fait condenser les vapeurs d'acide nitrique obtenues de la tête de la colonne du premier étage et on récupère ici un acide nitrique directement dans une forme hautement concentrée appropriée pour un recyclage dans la procédure de nitruration.

2. Procédé selon la revendication 1, **caractérisé en ce que** l'on ajoute dans le premier étage de l'acide sulfurique supplémentaire avec une concentration telle que la pression partielle de l'acide nitrique dans la vapeur de stripage en tête de la colonne du premier étage est augmentée de telle façon que l'on obtient une concentration en acide nitrique dans la plage de 40 à 99,99 % en masse.

3. Procédé selon la revendication 1 ou 2, **caractérisé en ce que** pour la fabrication d'un acide nitrique avec une concentration allant jusqu'à environ 70 % en masse, on apporte les déchets acides et l'acide sulfurique supplémentaire approximativement à la même hauteur vers la tête d'une colonne d'extraction et on soutire la phase vapeur formant l'acide nitrique concentré à la tête de cette colonne d'extraction.

4. Procédé selon la revendication 1 ou 2, **caractérisé en ce que** l'on exécute le retraitement des déchets acides dans le premier étage de telle façon que l'on apporte les déchets acides préchauffés à une température peu au-dessous de leur température d'ébullition à la zone médiane d'une première colonne (K1), qui comprend une partie d'extraction agencée au-dessous de la zone médiane pour le stripage des déchets acides à contre-courant de vapeur d'eau provenant de la bâche (V1), et une partie de renforcement agencée au-dessus de la zone médiane, et **en ce que** l'on amène l'acide sulfurique supplémentaire au moins partiellement à la partie supérieure de la partie de renforcement.

5. Procédé selon la revendication 1 ou 2, **caractérisé en ce que** l'on exécute le retraitement des déchets acides dans le premier étage de telle façon que l'on apporte les déchets acides préchauffés à une température peu au-dessous de leur température d'ébullition à la tête d'une colonne qui fonctionne comme une colonne d'extraction pour le stripage des déchets acides à contre-courant de la vapeur d'eau provenant de la bâche et qui comprend à sa tête un système de séparation supplémentaire pour la séparation d'une phase liquide contenant des composés nitroorganiques (MNT/DNT) vis-à-vis de la phase vapeur contenant l'acide nitrique, et **en ce que** l'on amène la phase vapeur obtenue de la colonne d'extraction et du système de séparation et contenant l'acide nitrique directement à une colonne de renforcement où l'on admet l'acide sulfurique concentré supplémentaire à la partie supérieure de cette colonne, et on transfère l'acide sulfurique obtenu dans la partie inférieure de la colonne de renforcement vers la colonne d'extraction et on le réunit finalement avec l'acide sulfurique dans la bâche de la colonne d'extraction.

6. Procédé selon l'une des revendications 1 à 5, **caractérisé en ce que** l'on met en oeuvre le premier étage du procédé à une pression dans la plage de 600 à 2000 mbar, et de préférence à pression atmosphérique.

7. Procédé selon l'une des revendications 1 à 6, **caractérisé en ce que** l'on amène l'acide sulfurique préconcentré obtenu dans la bâche de la colonne du premier étage à la partie supérieure d'une autre colonne de stripage (K2) qui fonctionne à une dépression entre 250 mbar et 550 mbar, et **en ce que** l'on procède dans cette autre colonne de stripage, au stripage de quantités restantes de composés nitroorganiques hors de l'acide sulfurique prépurifié, en contre-courant à la phase vapeur provenant de la bâche préchauffée (V2) de cette colonne de stripage (K2), le cas échéant en augmentant la part de vapeur au moyen de vapeur directe supplémentaire, et, par condensation de la phase vapeur obtenue à la tête de l'autre colonne de stripage (K2), on obtient un condensat de composés nitroorganiques acides aqueux et de l'acide sulfurique purifié à partir de sa bâche (V2).

8. Procédé selon l'une des revendications 1 à 7, **caractérisé en ce qu'**un séparateur (A1) pour la séparation du condensat acide hors de l'autre colonne de stripage (K2) est intégré dans le procédé, et on procède dans le séparateur à une séparation en une phase nitroorganique, qui peut être recyclée vers la procédure de nitruration, et en une phase aqueuse qui contient des quantités restantes de composés nitroorganiques.

9. Procédé selon la revendication 8, **caractérisé en ce que** l'on utilise les quantités restantes de phase aqueuse contenant des composés nitroorganiques et provenant du séparateur (A1) partiellement pour le rinçage au DNT dans la procédure de nitruration, et **en ce que** l'on amène la partie restante au moins partiellement à une nouvelle purification dans une colonne (K4) destinée à une extraction liquide/liquide en utilisant un agent d'extraction organique aromatique, de préférence du toluène, et **en ce que** l'on amène la phase d'agent d'extraction ici obtenue et chargée de composés nitroorganiques à la procédure de nitruration.

10. Procédé selon l'une des revendications 1 à 9, **caractérisé en ce que**, avant leur retraitement dans le premier étage du procédé, on ajoute aux déchets acides les acides de rinçage provenant de l'étage de rinçage du DNT dans la procédure de nitruration.

11. Procédé selon l'une des revendications 1 à 10, **caractérisé en ce que** les phases gazeuses contenant des oxydes azotés obtenus lors de la condensation des vapeurs d'acide nitrique ainsi que sous forme de fuites gazeuses provenant d'autre étage du procédé sont rincées avec de l'eau dans une colonne de lavage (K3) avec une surpression dans la plage de 1 à 7 bar, et l'on récupère grâce à cela une nouvelle quantité d'acide nitrique aqueux.

12. Procédé selon l'une des revendications 1 à 11, **caractérisé en ce que** l'on exécute la condensation des phases vapeur du premier étage et/ou de la colonne de stripage additionnelle (K2) dans des condenseurs/échangeurs de chaleur (W2, W3) alimentés avec de l'eau chaude, pour empêcher une séparation de DNT solide, et l'on maintient la température de l'eau chaude pour les condenseurs/échangeurs de chaleur (W2, W3) dans un ou plusieurs circuits d'eau chaude séparés par addition d'eau de refroidissement froide, dans la plage de 40° C à 70° C.

13. Procédé selon l'une des revendications 1 à 12, **caractérisé en ce que** l'acide sulfurique purifié, qui est obtenu à titre de produit de la bâche de l'autre colonne de stripage (K2), est concentré dans au moins un autre évaporateur (V3) sous un vide entre 160 et 10 millibars, à une concentration entre 85 et 97 % en masse, et est employé au moins partiellement comme acide sulfurique additionnel dans le premier étage du procédé.

14. Procédé selon l'une des revendications 1 à 13, **caractérisé en ce que** les colonnes de stripage (K1, K2) et leurs structures intérieures ainsi que les corps de remplissage utilisés dans celles-ci ou les garnitures structurées sont réalisés en matériau résistant à la corrosion, et les matériaux résistants à la corrosion préférés sont sélectionnés à partir de verre, de matières céramiques et/ou d'acier, revêtu(es) ou recouvert(es) d'émail ou de polymères fluorocarbonés ou hydrofluorocarbonés.

15. Installation pour la mise en oeuvre d'un procédé pour le retraitement de déchets acides provenant de procédures de fabrication de composés nitroaromatiques, en particulier de la fabrication de dinitrotoluol (DNT) ou de trinitrotoluol (TNT), avec récupération d'acide sulfurique et d'acide nitrique concentrés et purifiés, selon l'une des revendications 1 à 14, comprenant :
- une première colonne de stripage (K1) avec une conduite d'amenée (1) pour des déchets acides à retraiter, un évaporateur associé (V1) pour la récupération d'acide sulfurique préconcentré, et une conduite de sortie (2) pour une phase vapeur contenant de l'acide nitrique provenant de la tête de cette première colonne de stripage (K1),
- une autre colonne de stripage (K2) avec un évaporateur associé (V2) pour la préparation d'acide sulfurique purifié à partir de l'acide sulfurique préconcentré provenant de l'évaporateur (V1) de la première colonne de stripage (K1), qui est amené à la tête de cette autre colonne de stripage (K2), ainsi que
- au moins un autre évaporateur (V3) pour augmenter la concentration de l'acide sulfurique purifié provenant de l'évaporateur (V2) de l'autre colonne de stripage (K2), et
- des condenseurs/échangeurs de chaleur (W2, W3, W4) pour les phases vapeur qui sont obtenues à titre de produit en tête des colonnes de stripage (K1, K2) et de l'évaporateur (V3), ainsi que le cas échéant
- une colonne de rinçage (K3) pour le rinçage de gaz de fuites contenant des oxydes azotés, ainsi que
- les tubulures nécessaires pour l'alimentation des produits mis en oeuvre (1, 7), pour le transport et pour la répartition et l'évacuation des phases vapeur et des phases liquides obtenues sous forme de flux (2, 5, 8, 10, 21) dans le procédé et à titre de produits et de gaz de fuites (4, 12, 13, 17, 18, 21) du procédé, et
- les systèmes nécessaires de chauffage, de refroidissement et de régulation de pression,
**caractérisée en ce que**
la première colonne de stripage (K1) est dotée d'une conduite d'amenée (3) pour de l'acide sulfurique purifié fortement concentré provenant de l'autre évaporateur (V3), qui est reliée à la tête de l'autre colonne de stripage (K1).

16. Installation selon la revendication 15, **caractérisée en ce que** la première colonne de stripage est subdivisée en une colonne d'extraction et une colonne de renforcement, dans laquelle un dispositif séparateur, sous la forme d'un refroidisseur ["quencheur"] ou d'un déphlegmateur destiné à la séparation d'une phase aqueuse contenant des composés nitroorganiques est agencé dans la partie supérieure de la partie d'extraction, et **en ce que** la tête de la colonne d'extraction est reliée à une colonne de renforcement qui comprend à sa tête la conduite d'amenée pour l'acide sulfurique purifié fortement concentré provenant de l'autre évaporateur (V3).

17. Installation selon les revendications 15 ou 16, **caractérisée en ce qu'**elle comprend en supplément une colonne d'extraction (K4) avec une entrée pour agent d'extraction (14) destiné à l'extraction liquide/liquide d'une phase aqueuse qui a été obtenue par séparation de phase du condensat acide provenant de la phase vapeur de la seconde colonne de stripage (K2) dans la séparateur (A1).
